# EUROPEAN PATENT APPLICATION

(11) **EP 4 421 572 A1**
(43) Date of publication of application: **28.08.2024**
(21) Application number: 24154177.0
(22) Date of filing: 26.01.2024
(51) Int. Cl.: G05B 13/04

(54) **INFORMATION PROCESSING APPARATUS, INFORMATION PROCESSING METHOD AND INFORMATION PROCESSING PROGRAM**

(30) Priority: 21.02.2023 JP 2023025258
(71) Applicant: OMRON Corporation, Kyoto 600-8530 (JP)
(72) Inventor: TSUCHIKAWA, Kento, Kyoto-shi, 600-8530 (JP); KAWANOUE, Shinsuke, Kyoto-shi, 600-8530 (JP)
(74) Representative: Mewburn Ellis LLP

(57) **Abstract**

Provided is an information processing apparatus for generating a predictive model. The predictive model is configured to calculate, at a prediction start point, a value at a prediction point in the future by a predetermined time margin from the prediction start point. The information processing apparatus includes a reception unit configured to receive a setting of the prediction point, a setting of an explanatory variable section corresponding to a range including the prediction start point and a period before the prediction start point, and selection of one or more positions from among a plurality of position candidates in the explanatory variable section, and a calculation unit configured to calculate prediction accuracy of the value at the prediction point using one or more actual values at the selected one or more positions based on time series data of the actual value corresponding to the value calculated by the predictive model.

## Description

The present invention relates to an information processing apparatus, an information processing method, and an information processing program.

### INTRODUCTION

A technique for predicting a future value from a value observed using a predictive model is known.

Japanese Patent Laying-Open No. 2020-135757 discloses a control apparatus that calculates a prediction value from a value obtained by measuring a controlled variable using a predictive model for the controlled variable, and corrects a basic desired value in accordance with the calculated prediction value to determine a command desired value for the controlled variable.

WO 2017/094207 A discloses an information processing system capable of performing appropriate optimization even in a situation where there is input data that is not observed in mathematical optimization.

### SUMMARY

In generating a predictive model, it is necessary to optimize settings such as how far into the future the future value is predicted, which explanatory variable is selected, and in which range the explanatory variable is selected. Here, predicting the future value as far in the future as possible allows an increase in performance as a control system, but the further away from a prediction point, the more prediction accuracy may decrease. In order to optimize the predictive model with consideration given to such a trade-off relation, trial and error is required.

It is therefore an object of the present invention to provide an environment for assisting in generating a predictive model on a trial and error basis.

According to an embodiment of the present invention, provided is an information processing apparatus for generating a predictive model. The predictive model is configured to calculate, at a prediction start point, a value at a prediction point in the future by a predetermined time margin from the prediction start point. The information processing apparatus includes a reception unit configured to receive a setting of the prediction point, a setting of an explanatory variable section corresponding to a range including the prediction start point and a period before the prediction start point, and selection of one or more positions from among a plurality of position candidates in the explanatory variable section, and a calculation unit configured to calculate prediction accuracy of the value at the prediction point using one or more actual values at the selected one or more positions based on time series data of the actual value corresponding to the value calculated by the predictive model.

With this configuration, when one or more positions in the explanatory variable section are selected with the prediction start point and the explanatory variable section set, the information processing apparatus calculates the prediction accuracy of the value at the prediction point using the actual value at the selected one or more positions. It is possible to optimize, by referring to the calculated prediction accuracy, the prediction point, the explanatory variable section, and the one or more positions on a trial and error basis.

The information processing apparatus may further include a display control unit configured to visually output the prediction start point and the prediction point with the prediction start point and the prediction point associated with the time series data. With this configuration, it is possible to optimize the prediction start point and the prediction point with the prediction start point and the prediction point associated with the time series data.

The information processing apparatus may further include a generation unit configured to generate the predictive model using the one or more actual values at the selected one or more positions. With this configuration, it is possible to generate the predictive model in accordance with the selection of one or more positions.

The display control unit may visually output a prediction waveform calculated using the generated predictive model together with the time series data. With this configuration, it is possible to check the performance of the generated predictive model in a visual manner.

The information processing apparatus may further include a simulator configured to simulate a behavior of a control system including the predictive model. The simulator calculates an effect caused by a prediction compensation unit configured to calculate a compensation variable using the predictive model based on a difference between output values when the same input data is given to a first control system with the prediction compensation unit and to a second control system without the prediction compensation unit. With this configuration, it is possible to check the performance of the control system including the predictive model in a quantitative manner.

The reception unit may forcibly cause a time difference between the prediction start point and the prediction point to exceed a predetermined minimum value. With this configuration, it is possible to secure a time necessary for the control system including the predictive model to exhibit required performance.

According to another embodiment of the present invention, provided is an information processing method executed by a computer for generating a predictive model. The predictive model is configured to calculate, at a prediction start point, a value at a prediction point in the future by a predetermined time margin from the prediction start point. The information processing method includes receiving a setting of the prediction point, and a setting of an explanatory variable section corresponding to a range including the prediction start point and a period before the prediction start point, receiving selection of one or more positions from among a plurality of position candidates in the explanatory variable section, and calculating prediction accuracy of the value at the prediction point using one or more actual values at the selected one or more positions based on time series data of the actual value corresponding to the value calculated by the predictive model.

According to still another embodiment of the present invention, provided is an information processing program for generating a predictive model. The predictive model is configured to calculate, at a prediction start point, a value at a prediction point in the future by a predetermined time margin from the prediction start point. The information processing program causes a computer to execute receiving a setting of the prediction point, and a setting of an explanatory variable section corresponding to a range including the prediction start point and a period before the prediction start point, receiving selection of one or more positions from among a plurality of position candidates in the explanatory variable section, and calculating prediction accuracy of the value at the prediction point using one or more actual values at the selected one or more positions based on time series data of the actual value corresponding to the value calculated by the predictive model.

The foregoing and other objects, features, aspects, and advantages of the present invention will become more apparent from the following detailed description of the present invention when taken in conjunction with the accompanying drawings.

### BRIEF DESCRIPTION OF THE DRAWINGS

Fig. 1 is a diagram schematically illustrating an example of a control system that executes predictive control according to the present embodiment.
Fig. 2 is a diagram schematically illustrating an example of an effect caused by the predictive control illustrated in Fig. 1.
Fig. 3 is a diagram for describing processing of generating time series data according to the present embodiment.
Fig. 4 is a diagram schematically illustrating an example of a system configuration of a control system according to the present embodiment.
Fig. 5 is a block diagram illustrating an example of a hardware configuration of a control apparatus that is a component of the control system according to the present embodiment.
Fig. 6 is a block diagram illustrating an example of a hardware configuration of an information processing apparatus that is a component of the control system according to the present embodiment.
Fig. 7 is a flowchart illustrating an example of a processing procedure of generating a predictive model according to the present embodiment.
Figs. 8 to 11 are diagram schematically illustrating examples of a user interface screen for generating the predictive model according to the present embodiment.
Fig. 12 is a diagram schematically illustrating an example of simulation of the predictive control according to the present embodiment.
Fig. 13 is a block diagram illustrating an example of a functional configuration of the control apparatus and the information processing apparatus constituting the control system according to the present embodiment.

### DETAILED DESCRIPTION

An embodiment of the present invention will be described in detail with reference to the drawings. Note that the same or corresponding parts in the drawings are denoted by the same reference numerals to avoid the description from being redundant.

### <A. Application example>

First, an example of a case to which the present invention is applied will be described.

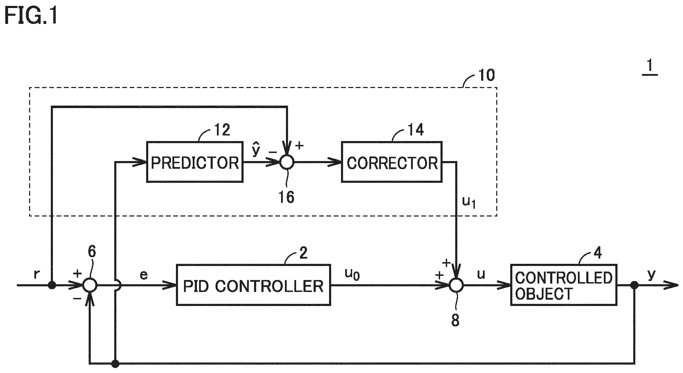

Fig. 1 is a diagram schematically illustrating an example of a control system that executes predictive control according to the present embodiment. With reference to Fig. 1, a control system 1 that executes the predictive control calculates a manipulated variable u to be given to a controlled object 4. A PID controller 2 that is a component of a feedback loop of control system 1 calculates an output u₀ from a deviation e in accordance with PID operation. A subtractor 6 outputs a difference between a desired value r and an output value y of controlled object 4 as deviation e.

Control system 1 includes a prediction compensation unit 10. Prediction compensation unit 10 predicts future changes in controlled variable y and calculates a compensation variable u₁. An adder 8 outputs, as manipulated variable u, the sum of output u₀ from PID controller 2 and compensation variable u₁ from prediction compensation unit 10.

More specifically, prediction compensation unit 10 includes a predictor 12 and a corrector 14. Predictor 12 includes a predictive model prepared in advance. Predictor 12 calculates a predicted controlled variable y^ of controlled object 4 by inputting a past output value y into the predictive model. Corrector 14 calculates compensation variable u₁ from a difference between desired value r and predicted controlled variable y^ of controlled object 4. Subtractor 16 outputs a difference between desired value r and predicted controlled variable y^ of controlled object 4.

The feedback control system including PID controller 2 calculates output u₀ (manipulated variable u) after deviation e becomes a non-zero value, so that it is not possible to control a disturbance or the like that is more rapid than a response time of PID controller 2.

Prediction compensation unit 10 can predict future changes in controlled variable y and correct manipulated variable u before deviation e becomes a non-zero value, so that it is possible to reduce the predicted changes. That is, the performance as the control system can be improved.

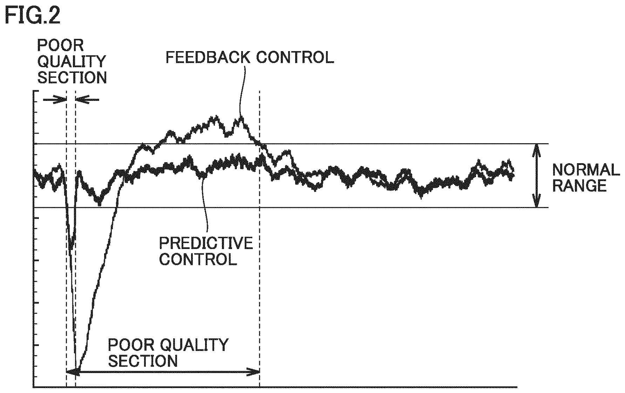

Fig. 2 is a diagram schematically illustrating an example of an effect caused by the predictive control illustrated in Fig. 1. Fig. 2 illustrates time series data of controlled variable y of controlled object 4 under the feedback control and time series data of controlled variable y of controlled object 4 under the predictive control.

With reference to Fig. 2, it can be seen that the use of the predictive control instead of the feedback control can make a section (poor quality section) in which controlled variable y is out of a normal range significantly shorter.

Next, a method for generating a predictive model 140 used in the predictive control will be described.

Predictive model 140 is generated from time series data including output value y of controlled object 4. For predictive model 140, any algorithm may be used. For example, predictive model 140 may be an autoregressive model or may use a neural network. An analysis tool may be used in generating predictive model 140.

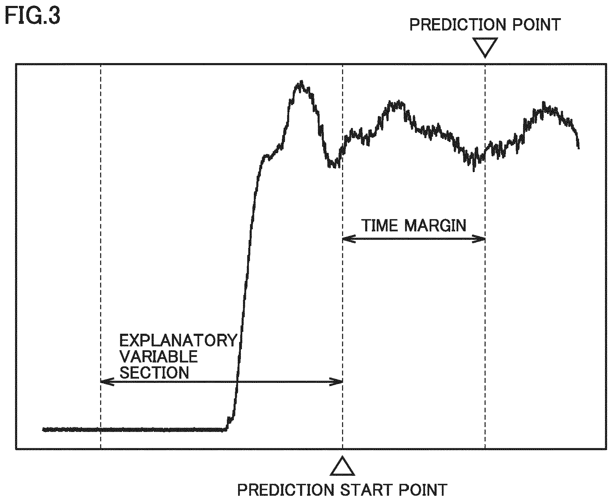

Fig. 3 is a diagram for describing processing of generating time series data according to the present embodiment. With reference to Fig. 3, a point in time at which predicted controlled variable y^ of controlled object 4 is calculated is set as a prediction point. A point in time in the future by a predetermined time (hereinafter, also referred to as "time margin") from the prediction start point serves as a prediction point. With respect to the prediction start point, a section in which the explanatory variable is collected (hereinafter, also referred to as "explanatory variable section") is set. The explanatory variable section is set, as desired, within a range including the prediction start point and a period before the prediction start point. The explanatory variable section has a start point set to a point in time before the prediction start point. The explanatory variable section may have an end point set to the prediction start point or set to a point in time before the prediction start point.

The explanatory variable is one or more pieces of input data used for calculating predicted controlled variable y^ of controlled object 4. Each explanatory variable is a value at one or more predetermined positions in the explanatory variable section.

The data acquired at the prediction start point (time series data of the explanatory variable collected in the explanatory variable section) is input into predictive model 140. Predictive model 140 outputs the value of predicted controlled variable y^ at the prediction point.

That is, at the prediction start point, predictive model 140 calculates a value at a prediction point in the future by the predetermined time margin from the prediction start point.

In order to improve performance of the predictive control, it is preferable to make the time margin longer. On the other hand, in order to improve prediction accuracy of predicted controlled variable y^, it is preferable to make the time margin shorter. Further, in order to improve the prediction accuracy of predicted controlled variable y^, it is also necessary to optimize the length of the explanatory variable section, the selection of the explanatory variable, and the like.

As described above, in order to generate predictive model 140, it is necessary to optimize a plurality of parameters including the time margin, the explanatory variable section, and the explanatory variable. The present embodiment is intended to assist in generating predictive model 140.

### <B. System configuration>

Next, a system configuration of a control system 50 according to the present embodiment will be described.

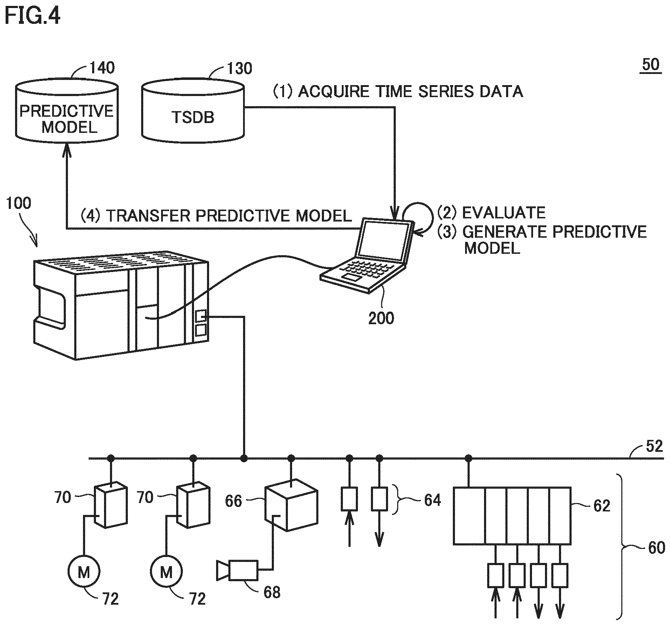

Fig. 4 is a diagram schematically illustrating an example of the system configuration of control system 50 according to the present embodiment. With reference to Fig. 4, control system 50 includes, as main functional components, a control apparatus 100 that controls a controlled object, and an information processing apparatus 200 connected to the control apparatus 100.

Control apparatus 100 may be implemented as a kind of computer such as a programmable controller (PLC). Control apparatus 100 is connected to a device group 60 over a field bus 52.

Control apparatus 100 includes a control logic (hereinafter, also referred to as "PLC engine") that controls equipment and/or machinery.

Control apparatus 100 collects data (hereinafter, also referred to as "input data") transferred from device group 60 to control apparatus 100. The collected input data is sequentially stored in a time series database (hereinafter, also referred to as "time series data base (TSDB)") 130 of control apparatus 100.

Control apparatus 100 includes predictive model 140 used in the predictive control.

It is preferable that an industrial communication protocol be applied to field bus 52. As such a communication protocol, EtherCAT (registered trademark), EtherNet/IP (registered trademark), DeviceNet (registered trademark), CompoNet (registered trademark), and the like are known.

Device group 60 includes a sensor for collecting the input data from equipment and/or machinery, and an actuator that operates in accordance with a command (hereinafter, also referred to as "output data") generated by control apparatus 100.

In the configuration example illustrated in Fig. 4, device group 60 includes a remote input/output (I/O) device 62, an I/O unit 64, an image sensor 66 and a camera 68, a servo driver 70, and a servomotor 72.

Remote I/O device 62 includes a communication unit that communicates over field bus 52, and an I/O unit that collects the input data and/or outputs the output data.

The I/O unit may be directly connected to the field bus. Fig. 4 illustrates an example where I/O unit 64 is directly connected to field bus 52.

Image sensor 66 executes image measurement processing such as pattern matching on image data captured by camera 68, and transmits the processing result to control apparatus 100.

Servo driver 70 drives servomotor 72 in accordance with the output data from control apparatus 100.

Information processing apparatus 200 is an information processing apparatus (an example of a computer) that generates a program, a parameter, predictive model 140, and the like necessary for control operation of control apparatus 100. Information processing apparatus 200 provides a development environment (a program generation and editing tool, a parser, a compiler, and the like) of a user program to be executed on control apparatus 100, a setting function for setting (configuring) parameters of control apparatus 100 and a device connected to control apparatus 100, a generation function for generating predictive model 140, a function for transmitting the generated program, parameter, predictive model 140, and the like to control apparatus 100, a function for correcting/modifying online the user program to be executed on control apparatus 100, and the like.

### <C. Hardware configuration>

Next, a hardware configuration of main apparatuses constituting control system 50 according to the present embodiment will be described.

### (c1: Hardware configuration of control apparatus 100)

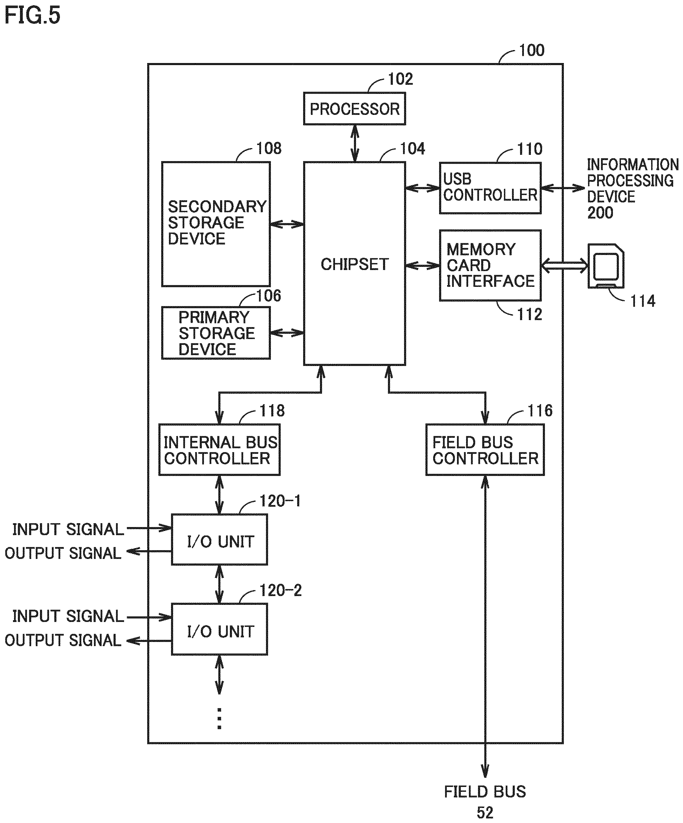

Fig. 5 is a block diagram illustrating an example of a hardware configuration of control apparatus 100 that is a component of control system 50 according to the present embodiment. With reference to Fig. 5, control apparatus 100 includes a processor 102 such as a central processing unit (CPU) or a micro-processing unit (MPU), a chipset 104, a primary storage device 106, a secondary storage device 108, a universal serial bus (USB) controller 110, a memory card interface 112, a field bus controller 116, and an internal bus controller 118.

Processor 102 reads various programs stored in secondary storage device 108, loads the programs into primary storage device 106, and executes the programs to implement PLC engine and control system 1. Chipset 104 controls data transmission and the like between processor 102 and each component.

Secondary storage device 108 stores not only a system program, but also a user program describing the control logic and predictive model 140.

USB controller 110 controls data exchanges with information processing apparatus 200 over a USB connection.

Memory card interface 112 is configured to receive a memory card 114 in a detachable manner and is capable of writing data to memory card 114 and reading various data (such as the user program and trace data) from memory card 114.

Internal bus controller 118 is an interface that exchanges data with I/O units 120-1, 120-2, ... mounted on control apparatus 100.

Field bus controller 116 controls data exchanges with device group 60 over field bus 52.

Fig. 5 illustrates the configuration example where processor 102 executes a program to provide necessary functions, but some or all of the functions thus provided may be implemented by a dedicated hardware circuit (for example, an application specific integrated circuit (ASIC), a field-programmable gate array (FPGA), or the like). A core part of control apparatus 100 may be implemented by hardware having a general-purpose architecture (for example, an industrial personal computer based on a general-purpose personal computer). In such a case, a plurality of operating systems (OSs) having different uses may be executed in parallel using a virtualization technology, and a necessary application may be executed on each OS.

### (c2: Hardware configuration of information processing apparatus 200)

As an example, information processing apparatus 200 according to the present embodiment is implemented by a program executed using hardware based on a general-purpose architecture (for example, a general-purpose personal computer).

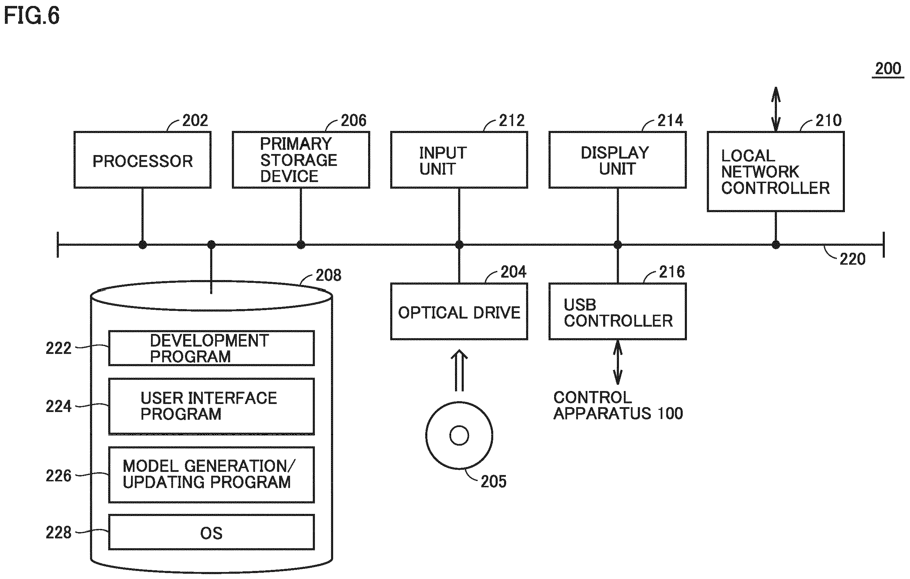

Fig. 6 is a block diagram illustrating an example of a hardware configuration of information processing apparatus 200 that is a component of control system 50 according to the present embodiment. With reference to Fig. 6, information processing apparatus 200 includes a processor 202 such as a CPU or an MPU, an optical drive 204, a primary storage device 206, a secondary storage device 208, a local network controller 210, an input unit 212, a display unit 214, and a USB controller 216. Such components are connected over a bus 220.

Processor 202 reads various programs stored in secondary storage device 208, loads the programs into primary storage device 206, and executes the programs to execute various processing including model generation processing as described later.

Secondary storage device 208 includes, for example, a hard disk drive (HDD) or a flash solid state drive (SSD). Secondary storage device 208 typically stores a development program 222 for generating a user program to be executed on information processing apparatus 200, debugging the generated user program, defining a system configuration, setting various parameters, and the like, a user interface program 224 for presenting data to the user and receiving an instruction from the user, a model generation/updating program 226 used for the generation of predictive model 140 and the like, and an OS 228. Secondary storage device 208 may store necessary programs other than the programs illustrated in Fig. 6.

An information processing program according to the present embodiment includes development program 222, user interface program 224, and model generation/updating program 226.

Information processing apparatus 200 includes optical drive 204 so as to allow a program stored, in a non-transitory manner, in a computer-readable recording medium 205 (for example, an optical recording medium such as a digital versatile disc (DVD)) to be read and installed in secondary storage device 208 or the like.

Various programs to be executed on information processing apparatus 200 may be installed via computer-readable recording medium 205, or may be downloaded from any server on a network and then installed. Further, functions provided by information processing apparatus 200 according to the present embodiment may be implemented via some of the modules provided by the OS.

Local network controller 210 controls data exchanges with another apparatus over any network.

Input unit 212 includes a keyboard, a mouse, or the like, and receives a user operation.

Display unit 214 includes a display, various indicators, a printer, or the like, and outputs a processing result and the like received from processor 202. Note that display unit 214 may be separate from information processing apparatus 200.

USB controller 216 controls data exchanges with control apparatus 100 over a USB connection.

Fig. 6 illustrates the configuration example where processor 202 executes a program to provide necessary functions, but some or all of the functions thus provided may be implemented by a dedicated hardware circuit (for example, an ASIC or an FPGA).

### <D. Generation of predictive model>

Next, a method for generating predictive model 140 used in the predictive control will be described.

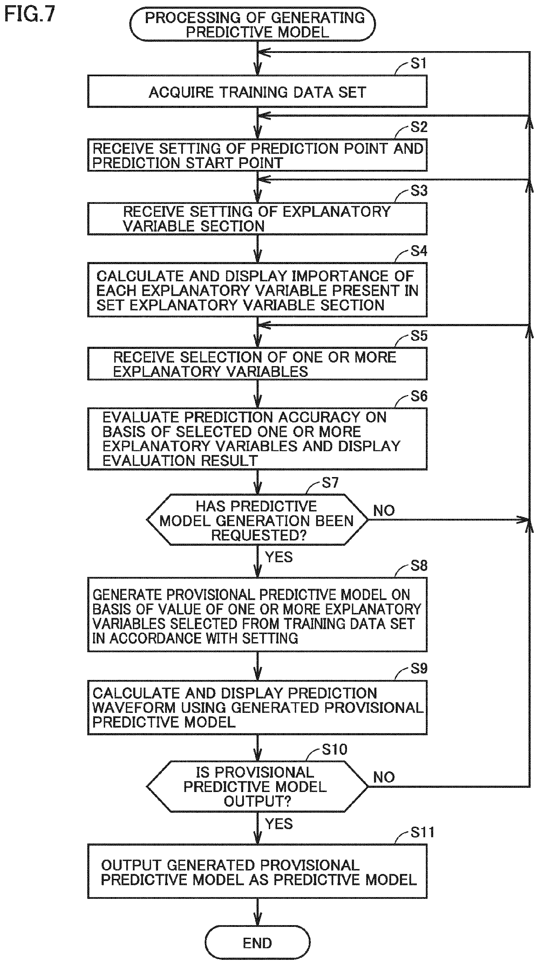

Fig. 7 is a flowchart illustrating an example of a processing procedure of generating predictive model 140 according to the present embodiment. Each step illustrated in Fig. 7 may be realized by processor 202 of information processing apparatus 200 executing a program (such as development program 222, user interface program 224, or model generation/updating program 226) or the like.

With reference to Fig. 7, information processing apparatus 200 acquires a training data set to be used in the generation of predictive model 140 (step S1). For example, the training data set includes at least some of the time series data stored in TSDB 130.

Information processing apparatus 200 receives a setting of prediction point 312 and prediction start point 314 (step S2), and receives a setting of the explanatory variable section (step S3). That is, information processing apparatus 200 receives the setting of prediction point 312, and the setting of the explanatory variable section corresponding to a range including prediction start point 314 and a period before prediction start point 314.

At this time, information processing apparatus 200 displays prediction start point 314 and prediction point 312 on display unit 214 with prediction start point 314 and prediction point 312 associated with the time series data.

Information processing apparatus 200 calculates and displays importance of each explanatory variable (offset position) present in the set explanatory variable section (step S4). Then, information processing apparatus 200 receives selection of one or more explanatory variables (step S5). That is, information processing apparatus 200 receives one or more positions selected from among a plurality of position (offset position) candidates in the explanatory variable section.

Information processing apparatus 200 evaluates prediction accuracy based on the selected one or more explanatory variables and displays the evaluation result (step S6). That is, information processing apparatus 200 calculates prediction accuracy of the value at prediction point 312 using one or more actual values corresponding to the selected one or more explanatory variables based on time series data of the actual value corresponding to the value calculated by predictive model 140.

Information processing apparatus 200 determines whether or not predictive model generation has been requested (step S7). When the predictive model generation has been requested (YES in step S7), information processing apparatus 200 generates a provisional predictive model based on the value of one or more explanatory variables selected from the training data set in accordance with the settings (step S8). That is, the value of the selected explanatory variable (actual value at each offset position) is used in the generation of the provisional predictive model. Note that one prediction point is associated with the value of one or more explanatory variables. A plurality of sets of the value of the prediction point and the value of one or more explanatory variables are typically used in the generation of the predictive model.

Information processing apparatus 200 calculates and displays a prediction waveform using the generated provisional predictive model (step S9).

Information processing apparatus 200 receives a choice of whether or not to output the provisional predictive model (step S10). When a choice that the provisional predictive model is should not be output has been given (NO in step S10), information processing apparatus 200 executes again the processing of generating the provisional predictive model (steps S1, S2, S3, and S5).

When a choice that that the provisional predictive model should be output has been given (YES in step S10), information processing apparatus 200 outputs the generated provisional predictive model as predictive model 140 (step S11). Then, the processing is brought to an end.

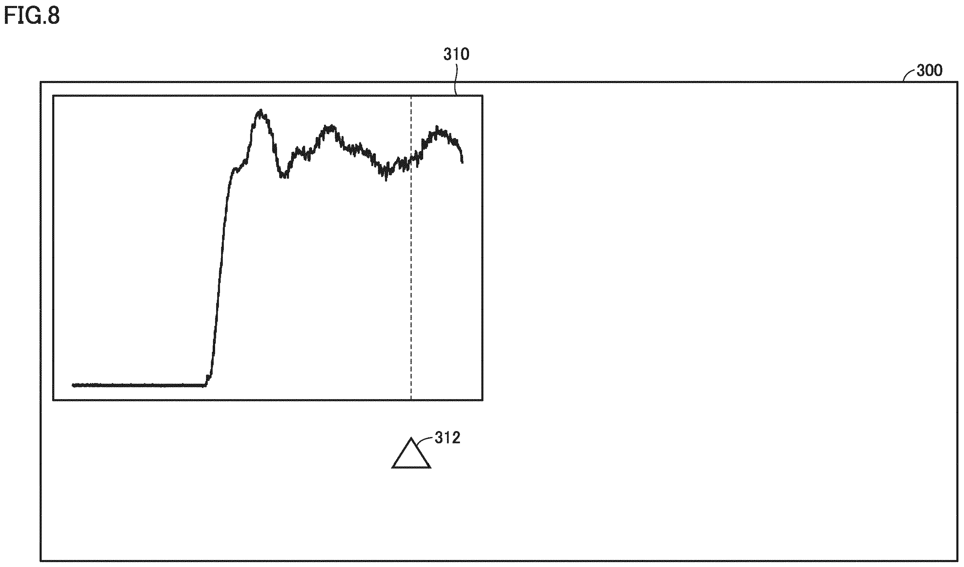

Figs. 8 to 11 are diagram schematically illustrating examples of a user interface screen for generating predictive model 140 according to the present embodiment.

With reference to Fig. 8, a user interface screen 300 displayed by information processing apparatus 200 includes a time graph 310 of the time series data corresponding to the predicted controlled variable. The user sets prediction point 312 on the time axis of time graph 310.

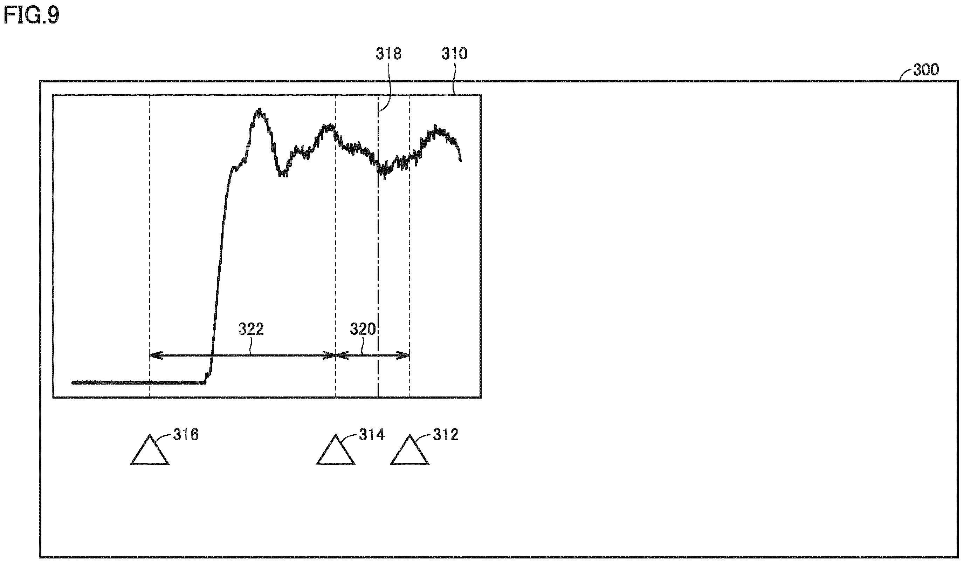

With reference to Fig. 9, the user next sets prediction start point 314 on the time axis of time graph 310. A time length between prediction point 312 and prediction start point 314 corresponds to a time margin 320.

Note that a guide 318 indicating a minimum value of time margin 320 necessary for the predictive control may be shown. That is, guide 318 indicates that prediction start point 314 needs to be set at the left side relative to guide 318.

The user sets prediction start point 314 on the time axis of time graph 310. A section start point 316 indicating a start point of the explanatory variable section is set. A section from section start point 316 to prediction start point 314 corresponds to an explanatory variable section 322.

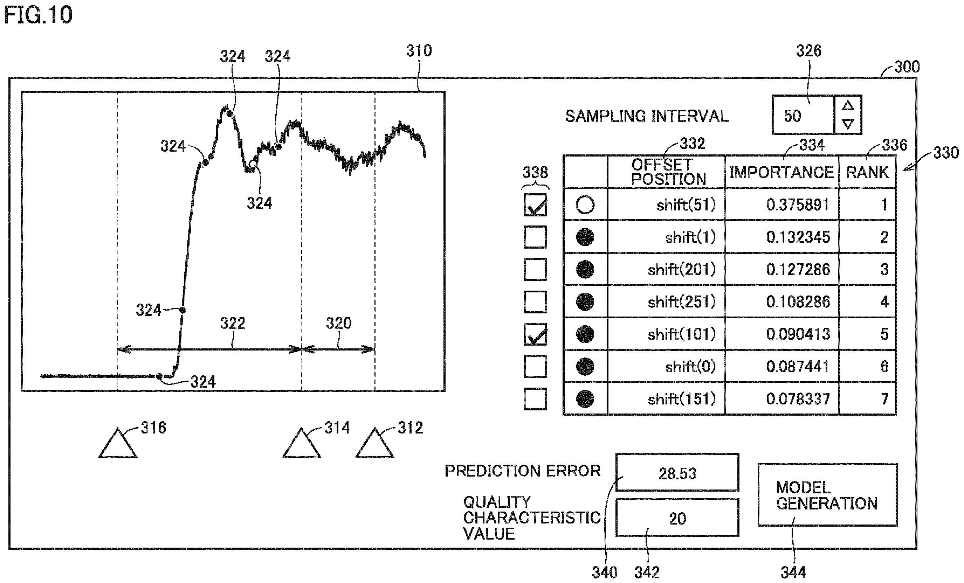

When prediction point 312, prediction start point 314, and section start point 316 are set, as illustrated in Fig. 10, a candidate list 330 including explanatory variables (offset positions) that fall within set explanatory variable section 322 is shown on user interface screen 300.

When the user checks a check box 338 of candidate list 330, the checked explanatory variable is used in the generation of predictive model 140. The explanatory variables shown in candidate list 330 may correspond to, for example, offset positions sampled at intervals set in an interval setting field 326. When the interval set in interval setting field 326 is updated, the explanatory variables (offset positions) shown in candidate list 330 may also be updated.

Candidate list 330 includes an offset position 332, importance 334, and a rank 336 of each of the explanatory variables that fall within explanatory variable section 322.

Offset position 332 indicates a position where the corresponding explanatory variable is present in explanatory variable section 322. As offset position 332, for example, an offset position (time shift) relative to prediction start point 314 may be used.

Importance 334 indicates how much influence the corresponding explanatory variable has on determining the value of prediction point 312. As an example, a correlation between the corresponding explanatory variable and the value of prediction point 312 may be used as importance 334.

Rank 336 indicates a rank in magnitude of importance 334 (for example, correlation based on random forest). In the example illustrated in Fig. 10, the explanatory variables are sorted in ascending order by rank (that is, in descending order by importance 334).

Where each explanatory variable included in candidate list 330 is positioned on time graph 310 may be visually shown.

When the user checks check box 338 to select the corresponding explanatory variable, information processing apparatus 200 evaluates the prediction accuracy based on the selected explanatory variable. An evaluation indicator for the prediction accuracy includes, for example, a prediction error 340 and a quality characteristic value 342.

Prediction error 340 indicates a difference between a prediction value calculated using the selected explanatory variable and the actual value of prediction point 312. For example, an error of autoregressive model (for example, root mean square error, mean absolute error, or coefficient of determination) obtained by regression analysis (autoregressive regression) using the value of the selected explanatory variable can be used as prediction error 340.

Quality characteristic value 342 is a value indicating the performance of the predictive control. Quality characteristic value 342 may be calculated based on the value of prediction error 340. As quality characteristic value 342, the execution result of simulation as described later may be used.

Note that when the user changes the selection of an explanatory variable used as the explanatory variable, information processing apparatus 200 updates prediction error 340 and quality characteristic value 342.

When the user selects a model generation button 344, information processing apparatus 200 generates predictive model 140 based on selected one or more explanatory variables (value at one or more offset positions).

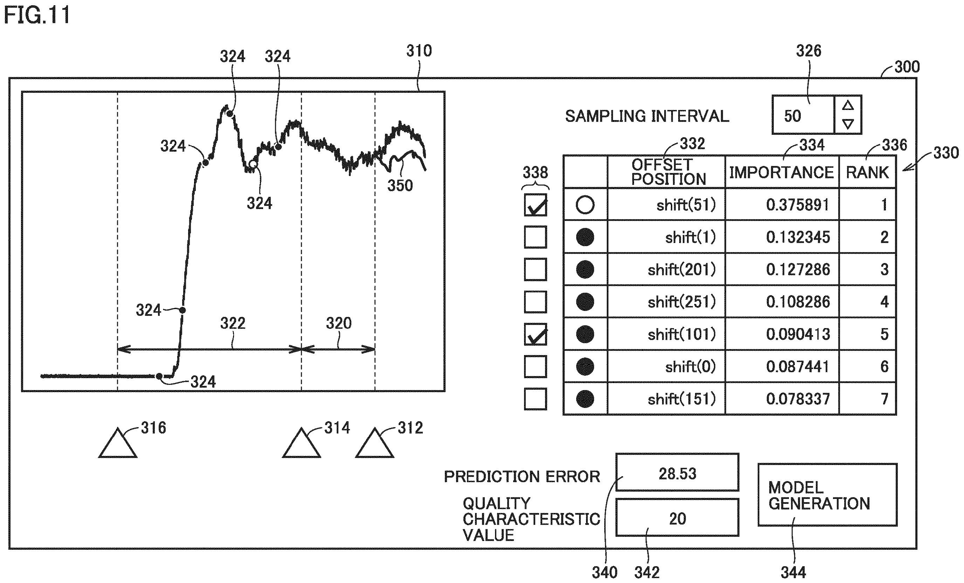

As illustrated in Fig. 11, information processing apparatus 200 may display a prediction waveform 350 calculated using the generated provisional predictive model together with time graph 310 of the time series data. The user refers to prediction waveform 350 based on the generated provisional predictive model or the like to determine whether or not the provisional predictive model can be output as predictive model 140. When the user determines that the provisional predictive model can be output as predictive model 140, the provisional predictive model is output as predictive model 140.

Providing user interface screen 300 as illustrated in Figs. 8 to 11 allows the user to generate suitable predictive model 140 while appropriately adjusting the settings of the time margin, the explanatory variable section, the explanatory variable, and the like.

Note that the example where the user checks check box 338 of candidate list 330 to select the corresponding explanatory variable as the explanatory variable of predictive model 140 has been described above, or alternatively, information processing apparatus 200 may select an explanatory variable ranked higher by default. In this case, information processing apparatus 200 calculates the importance of each explanatory variable using random forest or the like. Next, information processing apparatus 200 first excludes an explanatory variable lower in importance from the full set of explanatory variables, and sequentially calculates a prediction error by cross-validation for a set of remaining explanatory variables. Information processing apparatus 200 repeats the prediction error calculation and provides a set of explanatory variables that minimizes the prediction error as a default.

### <E. Simulation of predictive control>

Next, a simulation of the predictive control using the generated provisional predictive model (or predictive model 140) will be described. Information processing apparatus 200 may simulate the predictive control using the provisional predictive model (or predictive model 140). The user can also determine whether or not the predictive model is suitable with reference to the result of the simulation of the predictive control.

That is, information processing apparatus 200 simulates the behavior of control system 1 including predictive model 140 and evaluates the result of the simulation.

Information processing apparatus 200 obtains the time series data of controlled variable y in accordance with the control system illustrated in Fig. 1 using the provisional predictive model or predictive model 140 during the generation of predictive model 140 or after the generation of predictive model 140.

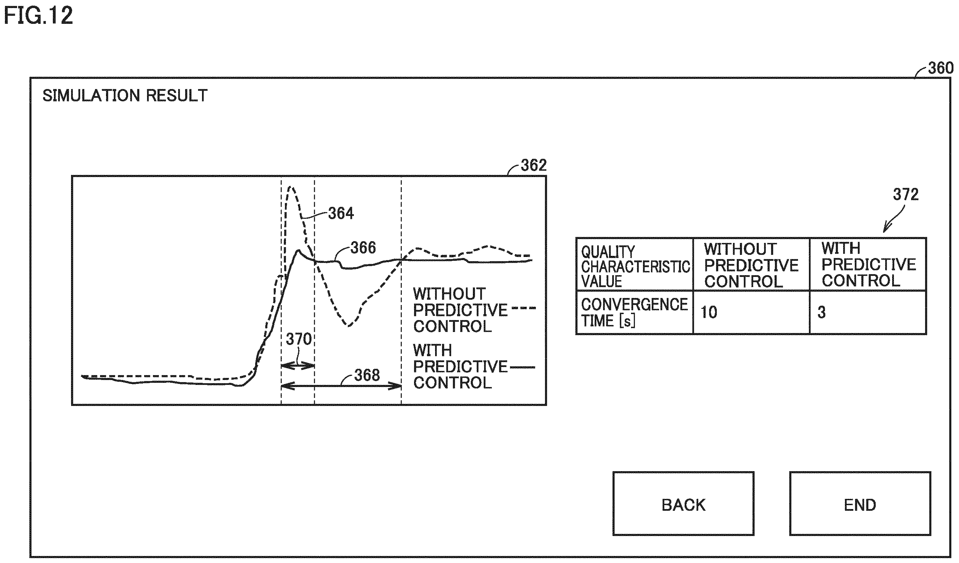

Fig. 12 is a diagram schematically illustrating an example of the simulation of the predictive control according to the present embodiment. With reference to Fig. 12, a user interface screen 360 includes a time graph 362 of the simulation result. On time graph 362, time series data 364 of controlled variable y generated by a control system without the predictive control and time series data 366 of controlled variable y generated by a control system with the predictive control are shown.

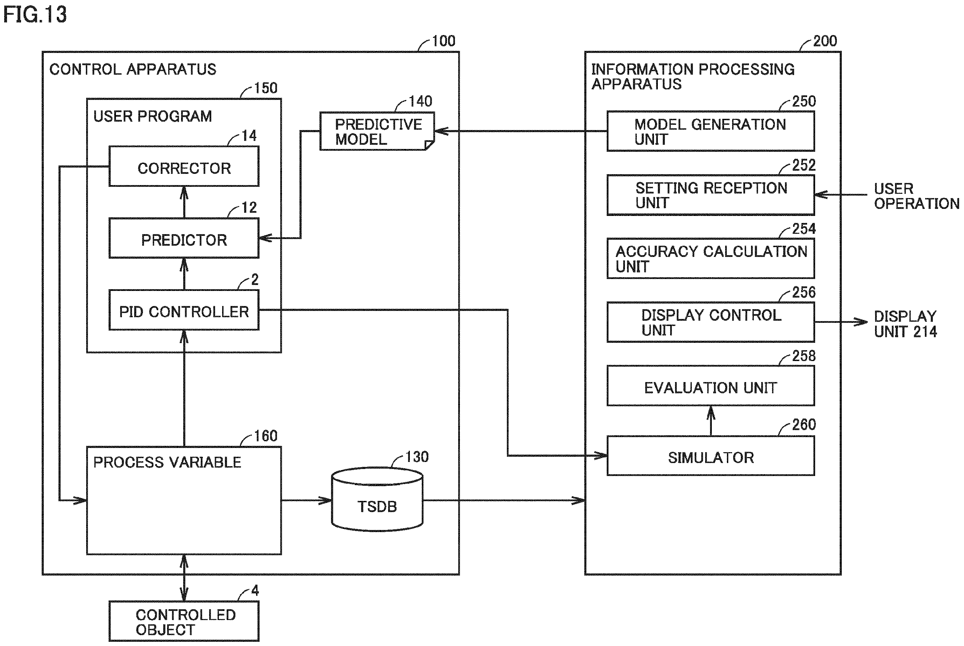

More specifically, information processing apparatus 200 (a simulator 260 illustrated in Fig. 13) calculates an effect caused by prediction compensation unit 10 (see Fig. 1) that calculates compensation variable u₁ using the provisional predictive model or predictive model 140 based on a difference between output values y (for example, a convergence time or the like) when the same input data (actual measurement value of output value y of controlled object 4) is given to a proper control system 1 with prediction compensation unit 10 and to a control system without prediction compensation unit 10 (that is, only with PID controller 2).

Time graph 362 may show a time required for controlled variable y to converge within a predetermined range of desired value r. In Fig. 12, as an example, a convergence time 368 of the control system without the predictive control and a convergence time 370 of the control system with the predictive control are shown.

User interface screen 360 includes an evaluation result 372 obtained by the simulation of the predictive control. Evaluation result 372 may include a convergence time as a value indicating the performance of the predictive control (the effect caused by prediction compensation unit 10). The user can evaluate, by referring to evaluation result 372, the performance of the predictive control by the provisional predictive model being generated or generated predictive model 140.

Note that when determining that the predictive control cannot perform sufficiently, the user may regenerate predictive model 140 or the like.

### <F. Functional configuration>

Next, an example of a functional configuration of control system 50 according to the present embodiment will be described.

Fig. 13 is a block diagram illustrating an example of a functional configuration of control apparatus 100 and information processing apparatus 200 constituting control system 50 according to the present embodiment.

With reference to Fig. 13, a user program 150 that is executed by control apparatus 100 includes PID controller 2, predictor 12, and corrector 14. Such components correspond to control system 1 that executes the predictive control. Predictive model 140 provided from information processing apparatus 200 is given to corrector 14.

Control apparatus 100 manages process variables 160 including input data, output data, and internal data. Time series data of a variable designated in advance among process variables 160 is stored in TSDB 130.

Information processing apparatus 200 includes, as main functional components, a model generation unit 250, a setting reception unit 252, an accuracy calculation unit 254, a display control unit 256, an evaluation unit 258, and simulator 260. Such functional components may be implemented by processor 202 of information processing apparatus 200 executing a program (such as development program 222, user interface program 224, or model generation/updating program 226).

Model generation unit 250 corresponds to a generation unit, and generates predictive model 140 using selected one or more explanatory variables (one or more actual values at selected one or more positions (offset positions)).

Setting reception unit 252 corresponds to a reception unit, and receives the setting of prediction point 312, and the setting of explanatory variable section 322 corresponding to a range including prediction start point 314 and a period before prediction start point 314. Further, setting reception unit 252 receives selection of one or more positions from among a plurality of position (offset position) candidates in explanatory variable section 322.

In a case where guide 318 (see Fig. 9) is shown, setting reception unit 252 may forcibly cause a time difference between prediction start point 314 and prediction point 312 to exceed a predetermined minimum value.

For convenience of description, a configuration where setting reception unit 252 receives the user settings will be given as an example, but such a setting reception unit may be provided for each setting.

Accuracy calculation unit 254 corresponds to a calculation unit, and evaluates the prediction accuracy based on selected one or more explanatory variables. As an example, accuracy calculation unit 254 calculates the prediction accuracy of the value at prediction point 312 using the value of the selected one or more explanatory variables (actual value at the offset position) based on the time series data of the actual value corresponding to the value calculated by the predictive model 140 (for example, predicted controlled variable y^). More specifically, accuracy calculation unit 254 calculates the prediction error by regression analysis using the value of the selected one or more explanatory variables (actual value at the offset position).

Display control unit 256 controls display content on display unit 214. As an example, display control unit 256 causes display unit 214 to display prediction start point 314 and prediction point 312 with prediction start point 314 and prediction point 312 associated with the time series data. That is, display control unit 256 visually outputs prediction start point 314 and prediction point 312 with prediction start point 314 and prediction point 312 associated with the time series data.

Note that "visually output" means that display unit 214 included in information processing apparatus 200 and/or any desired display unit located outside information processing apparatus 200 generates and outputs a signal and/or data necessary for outputting an image or a video.

Evaluation unit 258 evaluates the result of the simulation executed by simulator 260.

Simulator 260 simulates the behavior of control system 1 including predictive model 140 that executes the predictive control.

Note that simulator 260 may be installed in control apparatus 100 instead of information processing apparatus 200. Simulator 260 may be executed using a computing resource other than control apparatus 100 or information processing apparatus 200.

Furthermore, the functional components included in information processing apparatus 200 may be implemented by using a plurality of computing resources. Further, all or some of the functional components included in information processing apparatus 200 may be implemented on a cloud environment.

As described above, control system 50 according to the present embodiment can be implemented in any form in accordance with required performance, available resources, and the like.

### <G. Modification>

The above includes the description of the example where predictive model 140 calculates predicted controlled variable y^ from controlled variable y, or alternatively, predictive model 140 that calculates predicted controlled variable y^ from controlled variable y and manipulated variable u may be used.

Further, in addition to controlled variable y and manipulated variable u, or instead of controlled variable y and manipulated variable u, another variable may be selected as the explanatory variable. In this case, a variable selectable as the explanatory variable may be shown in candidate list 330 (see Fig. 9). The user can select, as desired, a variable suitable for calculating predicted controlled variable y^.

### <H. Advantages>

In the control system according to the present embodiment, the prediction point, the prediction start point (time margin), the explanatory variable section, and the explanatory variable can be each optimized by referring to the information provided on the user interface screen during the process of generating the predictive model from the collected time series data. That is, in order to assist the user in making settings, the importance of each explanatory variable is shown, and the evaluation indicator of the prediction accuracy is shown based on the selected explanatory variable.
Furthermore, the prediction waveform is also shown based on the generated provisional predictive model. The user can optimize, by referring to such information, the predictive model on a trial and error basis.

Although the embodiment of the present invention has been described, it is clearly understood that the same is by way of illustration and example only and is not to be taken by way of limitation. The scope of the present invention is interpreted by the terms of the appended claims, and the present invention is intended to include the claims, equivalents of the claims, and all modifications within the scope.

## Claims

1. An information processing apparatus (200) for generating a predictive model (140), the predictive model being configured to calculate, at a prediction start point (314), a value at a prediction point (312) in a future by a predetermined time margin (320) from the prediction start point, the information processing apparatus comprising:
a reception unit (252) configured to receive a setting of the prediction point, a setting of an explanatory variable section (322) corresponding to a range including the prediction start point and a period before the prediction start point, and selection of one or more positions (332) from among a plurality of position candidates in the explanatory variable section; and
a calculation unit (254) configured to calculate prediction accuracy (340) of the value at the prediction point using one or more actual values at the selected one or more positions based on time series data of the actual value corresponding to the value calculated by the predictive model.

2. The information processing apparatus according to claim 1, further comprising a display control unit (256) configured to visually output the prediction start point and the prediction point with the prediction start point and the prediction point associated with the time series data.

3. The information processing apparatus according to claim 2, further comprising a generation unit (250) configured to generate the predictive model using the one or more actual values at the selected one or more positions.

4. The information processing apparatus according to claim 3, wherein the display control unit is configured to visually output a prediction waveform (350) calculated using the predictive model generated together with the time series data.

5. The information processing apparatus according to any one of claims 1 to 4, further comprising a simulator (260) configured to simulate a behavior of a control system including the predictive model, wherein the simulator calculates an effect caused by a prediction compensation unit (10) configured to calculate a compensation variable using the predictive model based on a difference between output values when a same input data is given to a first control system (1) with the prediction compensation unit and to a second control system without the prediction compensation unit.

6. The information processing apparatus according to any one of claims 1 to 5, wherein the reception unit is configured to forcibly cause a time difference between the prediction start point and the prediction point to exceed a predetermined minimum value.

7. An information processing method executed by a computer (200) for generating a predictive model (140), the predictive model being configured to calculate, at a prediction start point (314), a value at a prediction point (312) in a future by a predetermined time margin (320) from the prediction start point, the information processing method comprising:
receiving a setting of the prediction point, and a setting of an explanatory variable section (322) corresponding to a range including the prediction start point and a period before the prediction start point (S2);
receiving selection of one or more positions (332) from among a plurality of position candidates in the explanatory variable section (S3); and
calculating prediction accuracy (340) of the value at the prediction point using one or more actual values at the selected one or more positions based on time series data of the actual value corresponding to the value calculated by the predictive model (S6).

8. An information processing program (222, 224, 226) for generating a predictive model (140), the predictive model being configured to calculate, at a prediction start point (314), a value at a prediction point (312) in a future by a predetermined time margin (320) from the prediction start point, the information processing program causing a computer (200) to execute:
receiving a setting of the prediction point, and a setting of an explanatory variable section (322) corresponding to a range including the prediction start point and a period before the prediction start point (S2);
receiving selection of one or more positions (332) from among a plurality of position candidates in the explanatory variable section (S3); and
calculating prediction accuracy (340) of the value at the prediction point using one or more actual values at the selected one or more positions based on time series data of the actual value corresponding to the value calculated by the predictive model (S6).
